(19) Europäisches Patentamt
European Patent Office
Office européen des brevets

(11) **EP 0 782 739 B1**

(12) **EUROPÄISCHE PATENTSCHRIFT**

(45) Veröffentlichungstag und Bekanntmachung des Hinweises auf die Patenterteilung:
**21.10.1998 Patentblatt 1998/43**

(21) Anmeldenummer: **95931887.4**

(22) Anmeldetag: **19.09.1995**

(51) Int Cl.$^6$: **G06K 15/00**

(86) Internationale Anmeldenummer:
**PCT/DE95/01287**

(87) Internationale Veröffentlichungsnummer:
**WO 96/09611 (28.03.1996 Gazette 1996/14)**

(54) **CONTROLLER ZUR AUFBEREITUNG VON KODIERTEN BILDINFORMATIONEN**

CONTROLLER FOR PREPARING CODED IMAGE DATA

CONTROLEUR UTILISE DANS LA PREPARATION DE DONNEES D'IMAGE CODEES

(84) Benannte Vertragsstaaten:
**BE DE FR GB**

(30) Priorität: **20.09.1994 DE 4433536**

(43) Veröffentlichungstag der Anmeldung:
**09.07.1997 Patentblatt 1997/28**

(73) Patentinhaber: **Océ Printing Systems GmbH**
**85586 Poing (DE)**

(72) Erfinder: **BÄUMLER, Ulrich**
**D-85586 Poing (DE)**

(74) Vertreter: **Schaumburg, Thoenes, Thurn**
**Patentanwälte**
**Postfach 86 07 48**
**81634 München (DE)**

(56) Entgegenhaltungen:
**US-A- 5 150 455        US-A- 5 157 765**

- **PATENT ABSTRACTS OF JAPAN vol. 14 no. 223 (P-1046) ,11.Mai 1990 & JP,A,02 051783 (BROTHER IND LTD) 21.Februar 1990,**

**Beschreibung**

Die Erfindung betrifft einen Controller zur Aufbereitung von kodierten Bildinformationen in einem elektrografischen Druck- oder Kopiergerät. Die Aufbereitung erfolgt so, daß ein Zeichengenerator ein Ladungsbild in Abhangigkeit von der Bildinformation auf einem Zwischentrager erzeugen kann. Die kodierten Bildinformationen werden dem Controller, wie er beispielsweise aus US 5 012 434 bekannt ist, in Form von Befehlen einer bestimmten, standardisierten Sprache von einem HOST oder einer sonstigen Datenverarbeitungsanlage übergeben. Solche Sprachen sind z.B. PCL (Printer Control Language) von Hewlett Packard und IPDS (Intelligent Printer Data Stream) von IBM. Die Befehle enthalten sämtliche Informationen zum Aufbau einer zu druckenden Seite. Insbesondere sind dies Positionierungsinformationen zur Positionierung von Zeichen und Bildern auf einer Seite, Informationen aus welchem Font einzelne Zeichen entnommen werden sollen, Verknüpfungsinformationen mit anderen Vorlagen wie z.B. Formularen und die Pixelinformation für spezielle zu druckende Bilder. Mit Hilfe des Controllers werden die empfangenen Bildinformationen so in matrixartig angeordnete Pixel umgesetzt, daß die Bildinformationen zeilen- oder spaltenweise an einen nachgeordneten Zeichengenerator übergeben werden können.

Aus US 5 157 765 ist ein Verfahren und eine Vorrichtung zur Aufbereitung eines kodierten Bilddatenstroms in einen Pixeldatenstrom zur Ansteuerung eines Druckers bekannt (siehe Präambeln der unabhängigen Ansprüche 1 und 6). Um Speicherplatz zu sparen und um die verfügbare Prozessorleistung mit hohem Wirkungsgrad zu nutzen, wird eine Aufteilung der Rasterarbeit zur Aufbereitung einer Seite auf mehrere Prozessoren vorgeschlagen. In einem vierstufigen Prozeß werden zunächst unabhängige Blöcke einer zu druckenden Seite identifiziert und gespeichert. Im zweiten Schritt werden die Blöcke in Objekte umgewandelt und Datenzugriffe auf häufig verwendete Ressourcen, wie beispielsweise Zeichen, organisiert. Im anschließenden Prozeß werden die Positionen der Objekte auf der aufzubereitenden Seite festgelegt. Mit der letzten Stufe werden die Objekte gerastert und zu einer gerasterten Gesamtseite aufbereitet.

Das Dokument JP-A-2 051 783 offenbart eine Bildverarbeitungsvorrichtung mit einer Mehrzahl von Rastermodulen, denen jeweils ein Bilddatenspeicher zugeordnet ist. Jedes Rastermodul greift auf Bilddaten aus dem eigenen Speicher und aus Speichern anderer Rastermodule zu. Es ist jedoch nicht ersichtlich, wie der Zugriff auf die einzelnen Speicher verwaltet wird.

Ein elektrografisches Druck- oder Kopiergerät, das einen optischen oder magnetischen Zeichengenerator enthält, ist beispielsweise aus EP-0 403 476 B1 bekannt. Als optischer Zeichengenerator eignet sich dabei sowohl ein einen Laserstrahl umlenkender Zeichengenerator als auch ein mit LED-Zeilen arbeitender Zeichengenerator. Mit einem Zeichengenerator werden in Pixelform vorliegende Druckinformationen in ein optisches oder magnetisches Bild umgesetzt, mit dem dann eine fotoleitende bzw. ferromagnetische Schicht einer kontinuierlich umlaufenden Ladungsspeichertrommel oder eines entprechenden bandförmigen Zwischenträgers des Druck- oder Kopiergeräts belichtet wird, um ein latentes Ladungs- bzw. magnetisches Feldbild zu erzeugen. Dieses Bild wird in bekannter Weise entwickelt und auf einen Aufzeichnungsträger umgedruckt.

Ein Controller muß abhängig von der Leistungsfähigkeit des Druck- oder Kopiergerätes, in dem er eingesetzt wird, eine entsprechende Rechen- und Rasterleistung aufweisen. Bei üblichen schnellen Druck- und Kopiergeräten werden 50 bis 350 DIN A4 Seiten pro Minute gedruckt. Abhängig von der spezifischen Leistung eines Druckers ist man gezwungen entweder spezielle Controller für den jeweiligen Drucker einzusetzen, oder aber eine Überdimensionierung des Controllers in Kauf zu nehmen. Die Rasterleistung wird durch die Zugriffszeiten auf die Speicher begrenzt und die Rechenleistung wird durch die Leistung des verwendeten Prozessors begrenzt.

Der vorliegenden Erfindung liegt die Aufgabe zugrunde, einen Controller zur Aufbereitung von kodierten Bildinformationen in einem elektrografischen Druck- oder Kopiergerät aufzuzeigen, der so aufgebaut ist, daß die Leistungsfähigkeit des Controllers an die jeweiligen Anforderungen des Druck- oder Kopiergerätes, in dem er eingesetzt wird, anpaßbar ist.

Diese Aufgabe wird erfindungsgemäß durch die in den Patentansprüchen 1 und 6 angegebenen Merkmale gelöst. Vorteilhafte Ausgestaltungen und Weiterbildungen der Erfindung sind in Unteransprüchen angegeben.

Mit Hilfe der Umsetzungseinheit können die kodierten Bildinformationen in voneinander unabhängig verarbeitbare Arbeitspakete gebündelt werden. Diese Arbeitspakete können jeweils einem Rastermodul übergeben werden, das unabhängig von benachbarten Rastermodulen die Bildinformationen druckergerecht aufbereiten kann. Bei dieser Aufbereitung können die einzelnen Rastermodule auf eine Ressourcen-Speichereinheit zugreifen, die die Bitmaps verschiedener Fonts und spezielle Bitmaps von wiederzugebenden Bildern enthält. Durch die zentrale Ressourcen-Speichereinheit ist eine einfache Verwaltung der Ressourcen gewährleistet.

Durch diese Anordnung ist die Aufbereitung von kodierten Bildinformationen in zwei getrennte Arbeitsschritte aufgeteilt. Der erste Arbeitsschritt ist von seiner Arbeitsmenge her so gewählt, daß er sehr schnell im Vergleich zum zweiten Arbeitsschritt durchführbar ist. Dadurch ist es möglich, mit Hilfe der Umsetzungseinheit eine Mehrzahl von Rastermodulen mit Arbeitspaketen zu versorgen. Abhängig von der Leistung des Druck- oder Kopiergerätes, in dem der Controller eingesetzt wird, können eine entsprechende Anzahl von parallel, jedoch unabhängig voneinander ar-

EP 0 782 739 B1

beitenden Rastermodulen eingesetzt werden, wodurch eine Skalierbarkeit der Leistung des Controllers erreicht wird. Ein weiterer Vorteil der Aufteilung der Arbeit des Controllers in zwei Arbeitsschritte ist, daß beim Wechsel des Sprachstandards, mit dem die kodierten Bildinformationen die Schnittstelle des Controllers erreichen, lediglich die Umsetzungseinheit an den Standard angepaßt werden muß. Die übrigen Einheiten des Controllers können in unveränderter Form weiterverwendet werden.

Jedes Rastermodul enthält einen Paket-Pufferspeicher, einen Ressourcen-Pufferspeicher und einen Rasterprozessor. Der Rasterprozessor kann vorzugsweise auf einen virtuellen Adreßraum zugreifen, der größer ist als der bei Betrachtung aller Ressourcen-Pufferspeicher und der Ressourcen-Speichereinheit zur Verfügung stehende physikalisch tatsächlich vorhandene Speicherraum. Mit Hilfe dieser virtuellen Speicherverwaltung wird der Gesamtspeicherbedarf minimiert. Jeder Prozessor kann auf jeden Speicherplatz des Gesamtsystems zugreifen, obwohl er nicht tatsächlich über die entsprechende Speicherkapazität lokal verfügt. Durch den blockweisen Datenaustausch stehen beim Folgezugriff auf ähnliche Adressen adressierte Speicherzellen lokal zur Verfügung. Dadurch wird die Anzahl der globalen Speicherzugriffe minimiert.

Durch das Merkmal, wonach der virtuelle Speicherraum größer ist, als der tatsächlich verfügbare physikalische Speicherraum, wird zudem eine Fragmentierung der physikalischen Speicher vermieden. Die Fragmentierung der Speicher entsteht dadurch, daß die Lebensdauer von angeforderten Speicherblöcken unterschiedlich lang ist, d.h., manche Blöcke werden zeitlich früher, manche zeitlich später wieder freigegeben. Irgendwann kommt es zu der Situation, daß im Speicher beliebig verstreut Speicherblöcke vorhanden sind, die noch nicht freigegeben wurden. Dies bewirkt nun, daß größere zusammenhängende Speicherblöcke nicht mehr vorhanden sind. Durch die Wahl eines größeren virtuellen Adreßraums ist die Wahrscheinlichkeit sehr hoch, daß stets ausreichend große zusammenhängende Speicherblöcke adressiert werden können.

Ein Ausführungsbeispiel der vorliegenden Erfindung wird im folgenden anhand der Zeichnung näher erläutert. Dabei zeigen

Figur 1    ein Blockdiagramm der Funktionseinheit eines elektrografischen Druckers mit Controller,
Figur 2    ein Blockdiagramm eines Rastermoduls eines Controllers,
Figur 3    eine schematische Darstellung der Zuordnung zwischen Arbeitspaket und Ressourcen,
Figur 4    den schematischen Aufbau eines Metakommandos eines Arbeitspaketes,
Figur 5    ein Ablaufdiagramm des Verfahrens zur Umsetzung von kodierten Bildinformationen in Arbeitspakete,
Figur 6    ein Ablaufdiagramm des Verfahrens zur Rasterung eines Arbeitspaketes,
Figur 7    ein Ablaufdiagramm des Verfahrensablaufs der Zuteilung eines Arbeitspaketes durch eine Paket-Verwaltungseinheit,
Figur 8    ein Ablaufdiagramm des Verfahrensablaufs des Druckprozesses zur Übergabe von Druckdaten an den Zeichengenerator, und
Figur 9    eine schematische Darstellung der Zuordnung eines virtuellen Adreßraumes zu einem physikalischen Adreßraum.

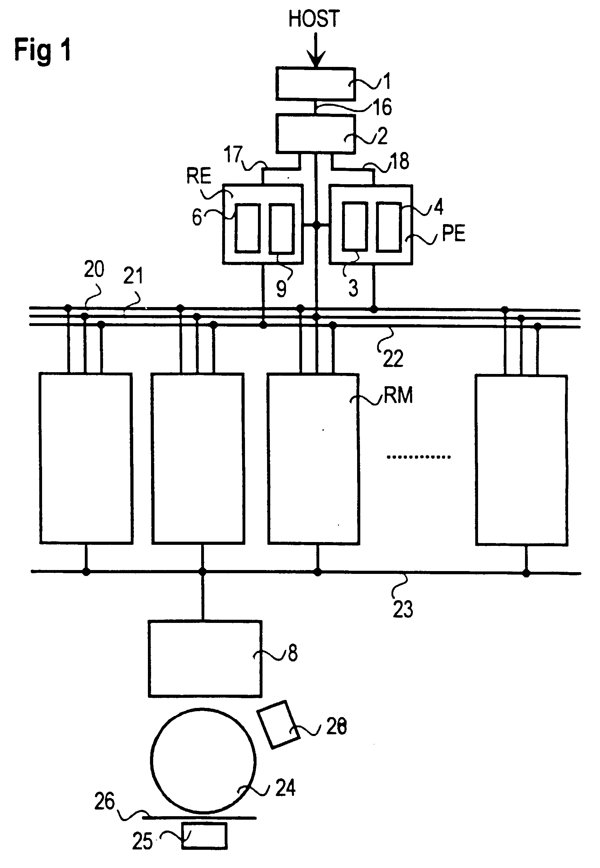

Das Blockdiagramm gemäß Figur 1 zeigt die Funktionseinheiten eines elektrografischen Druck- oder Kopiergerätes, die für die Übertragung der von einem HOST gelieferten kodierten Bildinformationen als sichtbares Abbild auf einem Aufzeichnungsträger 26 enthalten sind. Als Aufzeichnungsträger 26 dient beispielsweise Papier in Endlos- oder Einzelblattform. Die kodierten Bildinformationen werden von einer Schnittstelle 1, die im folgenden als HOST-Interface bezeichnet wird, empfangen. Dieses HOST-Interface 1 ist durch einen HOST-Datenbus 16 mit einer Umsetzungseinheit 2, die im folgenden als Parser 2 bezeichnet wird, gekoppelt. Der Parser 2 setzt die kodierten Bildinformationen in ein nachfolgend näher beschriebenes Format um, das von den nachfolgenden Funktionseinheiten verarbeitbar ist.

Die Bildinformationen werden dabei in zwei Gruppen aufgeteilt. Eine erste Gruppe bilden die sogenannten Ressourcen, die vom Parser 2 über einen lokalen Ressourcen-Bus 17 zu einer Ressourcen-Speichereinheit 6 übertragen und in dieser gespeichert werden. Die Ressourcen-Speichereinheit 6 und die dieser Einheit zugeordnete Ressourcen-Verwaltungseinheit 9 bilden die Ressourcen-Einheit RE. Die andere Gruppe bilden die Arbeitspakete 30, die über einen lokalen Displaylist-Bus 18 zu einer Paket-Speichereinheit 3 übertragen und dort abgelegt werden. Die Paket-Speichereinheit 3 und die dieser Einheit zugeordnete Paket-Verwaltungseinheit 4 bilden die Paket-Einheit PE.

Mittels der Paket-Einheit PE sind einzelne Rastermodule RM aus einer Mehrzahl von Rastermodulen RM auswählbar. Die Rastermodule RM sind über einen Bus 20, der im folgenden als Displaylistbus 20 bezeichnet wird, mit der Paket-Einheit PE gekoppelt. Die Ressourcen-Einheit RE ist über einen Ressourcenbus 22 mit den Rastermodulen RM gekoppelt. Die Steuerinformationen zwischen den Rastermodulen RM, dem Parser 2, der Ressourcen-Einheit RE und der Paket-Einheit PE werden über einen Controlbus 21 ausgetauscht. Diese Trennung in einzelne Busse wird hier zur Vereinfachung der Beschreibung verwendet. Es versteht sich, daß beliebige Busstrukturen, wie z.B. eine Multibusstruktur, anwendbar sind.

Die Rastermodule RM bereiten anhand der in den Arbeitspaketen 30 enthaltenen Daten und der im Ressourcen-

3

Speicher 6 hinterlegten Daten die Bildinformation in Pixelform auf. Da die in einem Arbeitspaket 30 enthaltenen Daten der Information entsprechen, die zum Aufbereiten einer kompletten zu druckenden Seite benötigt werden, bereitet jedes Rastermodul RM eine komplette zu druckende Seite druckfertig auf.

Zur Wiedergabe der Bildinformation einer Seite auf einem Aufzeichnungsträger 26, sind die Rastermodule RM über einen Pixelbus 23 mit einem Zeichengenerator 8 gekoppelt. Zum Druck einer Seite, liefert ein Rastermodul RM die Pixeldaten an den Zeichengenerator 8. Dieser steuert einen Laserstrahl oder eine LED-Zeile auf bekannte Weise so, daß ein latentes Ladungsbild auf einem fotoleitfähigen Zwischenträger 24 erzeugt wird. Dieses Ladungsbild wird in einer Entwicklerstation 28 auf bekannte Weise mit Hilfe von Tonerpartikeln entwickelt und in einer Umdruckstation 25 auf bekannte Weise mittels einer Corona auf den Aufzeichnungsträger 26 übertragen.

Beim beschriebenen Aufbau des Controllers werden in der Minimalversion zwei Hardware-Module, nämlich ein den Parser 2 und die Paket-Einheit PE enthaltendes I/O-Modul und ein Rastermodul RM benötigt. Wird jedoch ein Controller benötigt, dessen Leistungsfähigkeit auf die Leistungsfähigkeit einer Rastermoduls RM beschränkt sein soll, können das I/O-Modul und ein Rastermodul RM auch in einem Hardware-Modul zusammengefaßt werden.

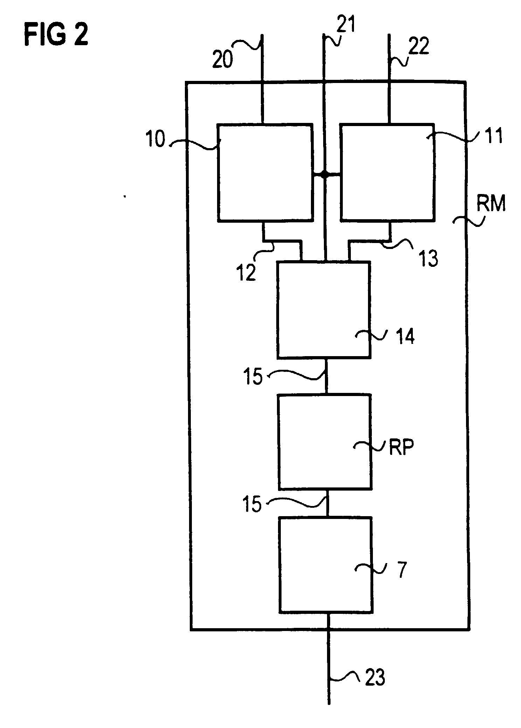

Die Rastermodule RM sind gleichartig gemäß Figur 2 aufgebaut. Sie enthalten je einen mit dem Displaylistbus 20 gekoppelten Paket-Pufferspeicher 10, einen mit dem Ressourcenbus 22 gekoppelten Ressourcen-Pufferspeicher 11, einen mit dem Controlbus 21 und über lokale Busse 12, 13 mit den Pufferspeichern 10, 11 gekoppelten Rasterprozessor 14 und einen über einen Rasterpagebus 15 mit dem Rasterprozessor 14 gekoppelten, als Ausgabeeinheit 7 dienenden Printprozessor 7. Der Rasterprozessor 14 und der Printprozessor 7 können unabhängig voneinander auf einen ihnen zugeordneten Raster-Pufferspeicher RP zugreifen. Dieser Raster-Pufferspeicher RP dient zur Zwischenspeicherung des Rasterergebnisses. Der Printprozessor 7 ist über den Pixelbus 23 mit dem Zeichengenerator 8 gekoppelt.

Die den Rastermodulen RM zugeführten Daten, werden durch den Parser 2 aufbereitet. Der Parser 2 schnürt aus der über das HOST-Interface 1 empfangenen, durch den Parser 2 dekodierten Bildinformation voneinander unabhängige Arbeitspakete 30, die jeweils eine vollständige zu druckende Seite als Displayliste 30 beschreiben. Die Arbeitspakete 30 werden von der Paket-Verwaltungseinheit 4 verwaltet, in der Paket-Speichereinheit 3 abgelegt und den Rastermodulen RM über den Displaylistbus 20 zur Verfügung gestellt. Font's und Images werden vom Parser 2 über den lokalen Ressourcenbus 17 an die Ressourcen-Verwaltungseinheit 9 übergeben und in der Ressourcen-Speichereinheit 6 abgelegt.

Die Art der vom HOST empfangenen Daten, und welcher Seite sie jeweils zugeordnet sind, ist aus dem empfangenen, kodierten Datenstrom entnehmbar. Der Parser 2 erhält beispielsweise ein Kommando, aus dem er schließen kann, daß eine neue zu drukkende Seite anfangt. Wenn eine neue Seite anfangt, müssen zu dem Arbeitspaket 30 einer Seite eventuell noch Steuerinformationen hinzugefügt werden, die vor Beginn der neuen Seite vom HOST gesendet wurden. Beispielsweise kann es gefordert sein, daß einer Seite ein sogenanntes Overlay, das zum Beispiel ein Firmenlogo oder ein Formular sein kann, hinzugefügt werden muß. Es müssen der aktuellen Seite auch Steuerinformationen hinzugefügt werden, die von einer vorhergehenden Seite auf die aktuelle Seite vererbt werden. Beispielsweise kann ein zu benutzender Font von einer Seite auf die nächste vererbt werden.

Bei der Generierung der Steuerinformationen durch den Parser 2, werden die vom HOST empfangenen Daten auch auf ihre Plausibilität und eventuelle Übertragungsfehler überprüft. Dadurch wird gewährleistet, daß sämtliche vom Parser 2 an die nachgeordneten Einheiten RE, PE übergebenen Daten bereits auf ihre Gültigkeit überprüft und korrekt sind. Die weitere Verarbeitung der Bildinformationen kann demzufolge nicht mehr durch nicht verarbeitbare Daten oder ähnliches gestört werden.

Die Displayliste 30 besteht aus einer Abfolge von einzelnen Steuerinformationen, die im folgenden als Metakommandos 31, 32 bezeichnet werden. Die Metakommandos 31, 32 können als interne Druckersprache interpretiert werden. Damit wird klar, daß der Parser 2 auch als Drucksprachenumsetzer eingesetzt wird. Wechselt die vom HOST verwendete Druckersprache beispielsweise von der PCL-Emulation zur IPDS-Emulation, kann durch einen Austausch des Parsers 2 der Controller an diesen Wechsel angepaßt werden. Die dem Parser 2 nachfolgenden Prozesse brauchen nicht oder nur in geringem Umfang geändert werden.

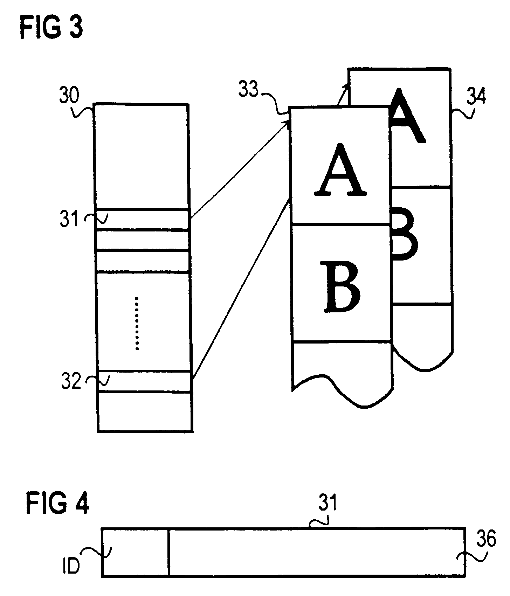

Die Displayliste 30 ist in den Figuren 3 und 4 dargestellt. Ein einzelnes Metakommando 31 besteht aus dem eigentlichen Metakommando ID und Zusatzinformationen 36 zu diesem Metakommando ID. Beispielsweise lautet das eigentliche Metakommando ID "Drucke ein "A" und als Zusatzinformation 36 wird die Adresse des "A" und der entsprechende zu benutzende Font 33 genannt. Ein anderer Displaylisteneintrag 32 lautet ebenfalls "Drucke ein "A" und als Zusatzinformation 36 ist die Adresse des entsprechenden Buchstabens "A" und der zugehörige, sich vom erstgenannten Font 33 unterscheidende Font 34 angegeben.

Im folgenden wird ein Beispiel eines Displaylisteneintrags in seiner Bytefolge aufgezeigt.

| 20 | Eigentliches Metakommando ID für Seitenanfang |
|---|---|
| 00 50 00 00 | Offset der Seite in X-Richtung also 50H dots vom linken Rand des Diodenkammes des Zeichengenerators 8 |

(fortgesetzt)

| 00 00 00 00 | Offset der Seite in Y-Richtung also 0 dots vom oberen Rand des Blattes. |
|---|---|
| 00 00 01 00 | Größe der Seite in X-Richtung. Die Seite ist 0100H in X-Richtung groß. |
| 00 00 02 00 | Größe der Seite in Y-Richtung. Die Seite ist 0200H in Y-Richtung groß. |
| 01 | Orientierung der Seite. Die Seite ist bezüglich dem Papierlauf um 90 Grad gedreht. |
| 21 | Eigentliches Metakommando ID für Seitenende. |

Das aufgezeigte Beispiel würde den Ausdruck einer Leerseite bewirken. Durch das erste eigentliche Metakommando ID=20 wird festgelegt, daß eine neue Seite beginnt. Als Zusatzinformation 36 werden die Seitenränder, die Seitengröße und die Orientierung des Drucks festgelegt. Mit dem nachfolgenden eigentlichen Metakommando ID=21 wird die Seite bereits wieder beendet, bevor ein Druckauftrag erfolgt.

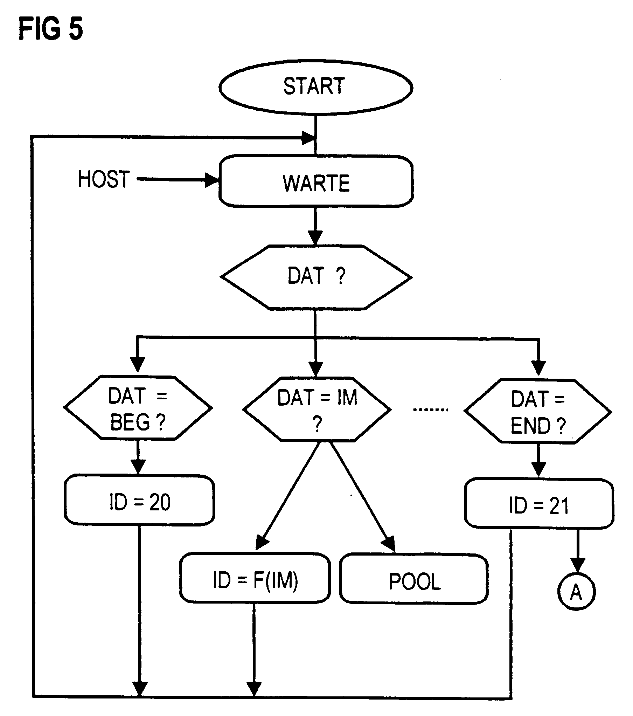

Anhand der Figuren 5 bis 8 wird im folgenden das erfindungsgemäße Verfahren dargestellt. Wie in Figur 5 gezeigt, wartet der Parser 2 nach seinem Start auf eine kodierte Bildinformation des HOST. Empfängt der Parser 2 Daten, die einer zu druckenden Seite zuzuordnen sind, erstellt er aus diesen Daten Arbeitspakete in der Displayliste 30. Empfangene Daten DAT, die ein spezielles wiederzugebendes Bildmuster, eine sogenannte Bitmap, beinhalten, werden der Ressourcen-Einheit RE zugeleitet, und dort, wie unten näher erläutert, abgelegt. Jedes Arbeitspaket enthält eine Abfolge von Metakommandos 31, 32. Beim Seitenbeginn BEG wird das eigentliche Metakommando ID=20 gesetzt und als Zusatzinformation 36 die Randbedingungen der Seite eingetragen. Ist das Metakommando 31 zum Beginn BEG einer Seite erzeugt und zur Paket-Speichereinheit 3 übertragen, wartet der Parser 2 erneut auf eine kodierte Bildinformation vom HOST.

Aus den vom HOST empfangenen Daten DAT, die nachfolgend in der Regel den Inhalt der Seite betreffen, extrahiert der Parser 2 nun Informationen, die auf bestimmte Stellen im Ressourcen-Speicher 6 verweisen. Sollen bestimmte in einem Font 33, 34 hinterlegte Zeichen gedruckt werden generiert der Parser 2 ein entsprechendes eigentliches Metakommando ID und fügt diesem als Zusatzinformation 36 die Anfangsadresse des Zeichens IM in der Ressourcen-Speichereinheit 6 an, an der das Zeichen abgelegt ist. Soll eine spezielle Bitmap IM gedruckt werden, dann leitet der Parser 2 dieses Bitmap IM der Ressourcen-Einheit RE zu und generiert ein eigentliches Metakommando ID mit einer Zusatzinformation 36, die auf die Anfangsadresse des in der Ressourcen-Einheit RE abgelegten Bitmaps IM verweisen. Erkennt der Parser 2 aus den vom HOST empfangenen Bildinformationen das Ende END einer zu druckenden Seite, generiert er ein Metakommando 31, 32, das das eigentliche Metakommando ID=21 enthält. Damit ist vom Parser 2 ein Arbeitspaket erstellt worden und als Displayliste 30 in der Paket-Speichereinheit 3 hinterlegt. Der Parser 2 sendet eine Mitteilung A an die Paket-Verwaltungseinheit 4.

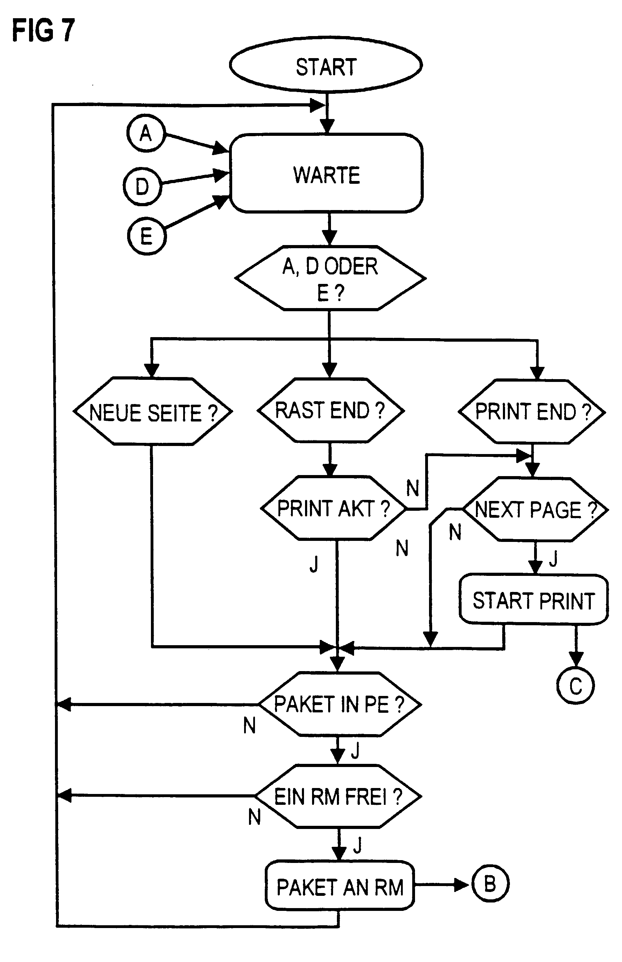

Die Paket-Verwaltungseinheit 4 reagiert auf diese Mitteilung A in der in Figur 7 dargestellten Weise. Ab einem Startzeitpunkt wartet die Paket-Verwaltungseinheit 4 auf Mitteilungen A, D, E vom Parser 2, vom Rasterprozessor 14 und vom Printprozessor 7. Hat die Paket-Verwaltungseinheit 4 die Mitteilung A erhalten, wonach ein Arbeitspaket 30 zur Rasterung in der Paket-Speichereinheit 3 vorliegt, überprüft sie, ob ein Rastermodul RM zur Bearbeitung des Arbeitspakets frei ist. Ist dies nicht der Fall, wartet die Paket-Verwaltungseinheit 4 solange, bis ein Rastermodul RM frei wird. Einem freien Rastermodul RM übergibt die Paket-Verwaltungseinheit 4 dann eine Mitteilung B. Diese Mitteilung B enthält die Anfangsadresse des Arbeitspakets in der Displayliste 30.

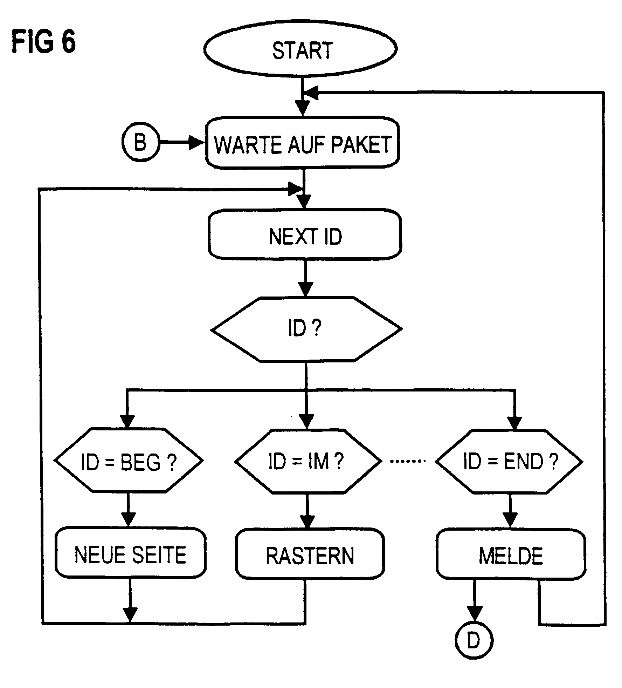

Gemäß Figur 6 wartet das Rastermodul RM auf diese Anfangsadresse D des Arbeitspakets. Anhand dieser Anfangsadresse B besorgt sich nun das Rastermodul RM über den Displaylistbus 20 aus der Paket-Speichereinheit 3 einen Teil der zum Arbeitspaket gehörigen Metakommandos 31, 32. Diese Metakommandos 31, 32 werden im Paket-Pufferspeicher 10 zwischengespeichert. Über den lokalen Bus 12 greift der Rasterprozessor 14 nacheinander auf die Metakommandos 31, 32 zu, und führt abhängig von ihnen die erforderlichen Rasteroperationen durch. Das erste Metakommando 31 enthält das eigentliche Metakommando ID=20 für den Beginn BEG der Seite. Auf bekannte, hier nicht näher beschriebene Weise, wird in Folge dessen die zu rasternde Seite in ihrer Größe und Ausrichtung vorbereitet. Die nachfolgenden Metakommandos 32 enthalten die Anfangsadressen der auf der Seite darzustellenden Bitmaps. Die benötigten, durch die Anfangsadressen festgelegten Speicherinhalte der Ressourcen-Speichereinheit 6, werden über den Ressourcenbus 22 in den Ressourcen-Pufferspeicher 11 des Rastermoduls RM übertragen. Der Rasterprozessor 14 erhält diese Speicherinhalte über den lokalen Bus 13 aus dem Ressourcen-Pufferspeicher 11. Die zu druckende Seite wird damit in bekannter Weise gerastert, und das Rasterergebnis wird im Raster-Pufferspeicher RP abgelegt. Erkennt der Rasterprozessor 14 anhand des eigentlichen Metakommandos ID=21 das Ende END des Arbeitspakets, dann überträgt es eine entsprechende Meldung D an die Paket-Verwaltungseinheit 4 und wartet auf die Übermittlung einer neuen Anfangsadresse B eines neuen Arbeitspakets.

Erhält die Paket-Verwaltungseinheit 4 (Figur 7) die Meldung D über das Ende der Rasterung eines Arbeitspakets, dann überprüft sie, ob ein Printprozessor 7 von einem der Rastermodule RM gegenwärtig einen Druckauftrag ausführt.

Ist dies der Fall, überprüft die Paket-Verwaltungseinheit 4, ob ein neues zu bearbeitendes Arbeitspaket in der Paket-Speichereinheit 3 vorliegt, und ob ein Rastermodul RM zur Rasterung des Arbeitspakets bereit ist. Ist dies der Fall, übergibt sie dieses neue Arbeitspaket an das entsprechende Rastermodul RM und überprüft erneut, ob ein Printprozessor 7 aktiv ist. Ist dies nicht der Fall, überprüft die Paket-Verwaltungseinheit 4, ob die nächste Seite, die dem Zeichengenerator 8 zugeführt werden soll, in einem der Raster-Pufferspeicher RP der Rastermodule RM verfügbar ist. Ist dies nicht der Fall, leitet die Speicher-Verwaltungseinheit 4 die Rasterung neuer Arbeitspakete ein, wenn die oben genannten entsprechenden Bedingungen erfüllt sind. Liegt bei einer Überprüfung, ob die nächste zu druckende Seite im Raster-Pufferspeicher RP eines Rastermoduls RM vorliegt, eine positive Quittungsinformation vor, dann wird das entsprechende Rastermodul RM zum Ausdruck der Seite aufgefordert.

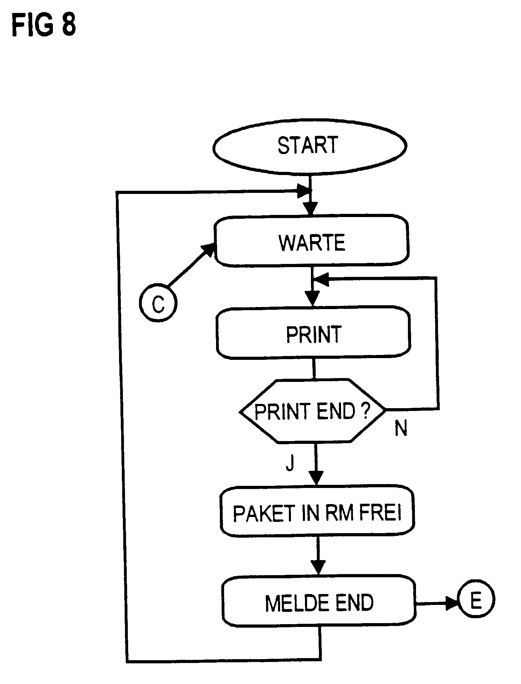

Der Printprozessor 7 dieses Rastermoduls RM erhält gemäß Figur 8 das entsprechende Kommando C. Infolgedessen übergibt der Printprozessor 7 das Rasterbild zeilen- oder spaltenweise an den Pixelbus 23. Dabei kontrolliert der Printprozessor 7 ständig, ob das Ende der Seite erreicht wird. Bei Erreichen dieses Seitenendes gibt der Printprozessor 7 den durch die soeben ausgegebene Seite belegten Speicherplatz im Raster-Pufferspeicher RP zum Wiederbeschreiben frei. Anschließend gibt der Printprozessor 7 eine Druck-Ende-Meldung E an die Paket-Verwaltungseinheit 4 aus. Diese erkennt die Druck-Ende-Meldung E und erlaubt es, dem Printprozessor 7 des Rastermoduls RM, das die nächste zu druckende Seite enthält, diese auf den Pixelbus 23 auszugeben.

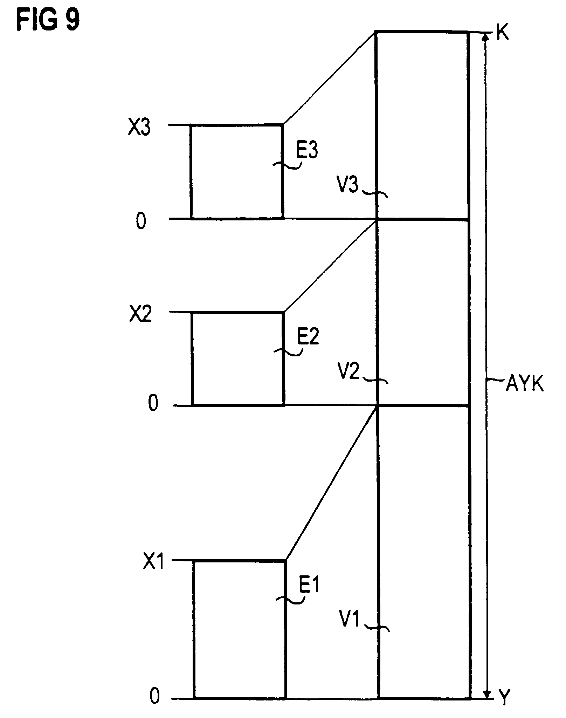

Der Datenaustausch zwischen der Ressourcen-Einheit RE und der Paketeinheit PE mit den Rastermodulen RM, erfolgt über den Displaylistbus 20 und den Ressourcenbus 22. Die Steuerinformationen dazu werden über den Controlbus 21 ausgetauscht. Der Datenaustausch erfolgt gemaß Figur 9 unter Verwendung eines virtuellen Adreßraums AYK, der auf einen physikalischen Adreßraum E1, E2, E3 abgebildet wird.

Jedem Hardware-Modul, in dem mindestens eine der Funktionseinheiten RE, PE, RM des Controllers angeordnet ist, ist ein physikalischer Adreßraum E1, E2, E3 zugeordnet, der bei der gleichen Anfangsadresse 0 beginnt und bei einer Endadresse endet X1, X2, X3. Um jede Speicheradresse innerhalb des Controllers eindeutig zu machen, werden die Adressen AYK, auf die im laufenden Betrieb Bezug genommen wird, von den Adressen E1, E2, E3 des physikalischen Speichers abgekoppelt. Dazu wird ein virtueller Adreßraum AYK eingeführt. Jedem Hardware-Modul der Funktionseinheiten RE, PE, RM ist dabei ein bestimmter Abschnitt V1, V2, V3 im virtuellen Adreßraum AYK zugeordnet. Die Umsetzung der virtuellen Adressen V1, V2, V3 auf die physikalischen Adressen E1, E2, E3 wird von der Memory Management Unit (MMU) der jeweiligen Prozessoren der Funktionseinheiten RE, PE, RM vorgenommen.

Die Speicher der Funktionseinheiten RE, PE, RM, sind in Blöcke gleicher Länge aufgeteilt, die im folgenden als "page" bezeichnet werden. Eine gebräuchliche Größe für eine solche "page" ist 4KByte. Jeder physikalischen "page" kann über Tabellen eine andere, im Grunde beliebige virtuelle Adresse Y bis K zugeordnet werden. Der Zugriff von Programmen über die virtuelle Adresse Y bis K auf die entsprechende Adresse 0 bis X im physikalischen Adressraum E1, E2, E3 ist vollkommen transparent, da die Prozessoren die Umsetzung quasi automatisch über Tabellen vornehmen.

Im dynamischen Betrieb erfolgt durch die zeitlich variable Freigabe von Speicherblöcken eine Fragmentierung des Speichers. Diese Fragmentierung wird durch Anwendung der virtuellen Adressierung dadurch verhindert, daß der virtuelle Adreßraum AYK größer als der physikalische Adreßraum E1, E2, E3 gewählt wird. Jeder physikalische Adreßraum E1, E2, E3 einer Funktionseinheit RE, PE, RM wird auf einen jeweils größeren virtuellen Adressraum V1, V2, V3 abgebildet. Der gesamte virtuelle Adressraum V1, V2, V3, auf dessen Adressen jede der einzelnen Funktionseinheiten direkt zugreifen kann erstreckt sich von einer Adresse Y bis zu einer Adresse K. Dabei gilt:

$$K = Y + \nu * (X1 + X2 + X3)$$

mit $\nu$ als Vergrößerungsfaktor für den physikalischen Adressraum E1, E2, E3. Bei Verwendung eines virtuellen Adreßraums AYK, der doppelt so groß ist wie der physikalische Adreßraum E1, E2, E3, es gilt $\nu=2$, werden Funktionsstörungen beim Rastern von Bildinformationen durch Speicherfragmentierung mit hoher Wahrscheinlichkeit vollständig vermieden.

Der Datenaustausch zwischen den Systemeinheiten RE, PE, RM, erfolgt nun über ein sogenanntes "paging". Normalerweise wird das "paging" zusammen mit der virtuellen Adressierung in Betriebssystemen eingesetzt, um die Grenzen des physikalischen Speichers zu überwinden. Dies geschieht dadurch, daß unter der Bedingung, daß kein physikalischer Speicher mehr im System vorhanden ist, der Inhalt einer "page" oder mehrerer "pages" eines ersten Speichers zu einem zweiten Speicher ausgelagert werden. Der zweite Speicher ist dabei häufig ein Festplattenspeicher. Welche "pages" ausgelagert sind und welchen virtuellen Adreßraum diese "pages" umfassen, ist in Tabellen abgelegt. Dies Tabellen werden von der Speicherverwaltung bearbeitet und von der Memory Management Unit (MMU) des Prozessors bei jedem Zugriff auf den Speicher interpretiert. Wenn auf eine derart ausgelagerte "page" zugegriffen wird, wird ein Interrupt ausgelöst, der eine Interrupt-Service-Routine zur Wiedererlangung der ausgelagerten "page" startet. Es wird zunächst durch Auslagerung nicht benötigter "pages" aus dem ersten Speicher in den zweiten Speicher Platz im ersten Speicher geschaffen. Dieser Platz wird dann mit den benötigten "pages" gefüllt. Anschließend werden die Tabellen der MMU entsprechend aktualisiert und der gewünschte Zugriff auf die "pages" kann erfolgen.

Diese Funktionalität handelsüblicher Prozessoren wird nun zum Datentransfer zwischen den Systemeinheiten PE, RE, RM des Controllers in abgewandelter Form verwendet. Mit Hilfe des "paging" wird auf Daten zugegriffen, die nicht lokal im Speicher 10, 11 eines Funktionsmoduls RE, PE, RM vorhanden sind. Greift beispielsweise der Rasterprozessor 14 eines Rastermoduls RM, E2 auf Grund einer im Metakommando 31 enthaltenen Anfangsadresse einer Bitmap auf seinen Paket-Pufferspeicher 10 zu, dann stellt seine MMU zunächst fest, ob der im Metakommando 31 genannten virtuellen Adresse Y bis K eine lokal verfügbare physikalische Adresse 0 bis X2 zugeordnet ist. Ist dies nicht der Fall, wird die entsprechende Interrupt-Service-Routine ausgelöst. Diese Interrupt-Service-Routine bewirkt den Transfer der benötigten "page" zum Paket-Pufferspeicher 10 des Rastermoduls RM. Die "page" befindet sich beispielsweise in der Ressourcen-Speichereinheit 6. Die Interrupt-Service-Routine stoppt den Programmlauf des Rasterprozessors 14 und stellt sicher, daß das Programm später an derselben Stelle wieder fortgesetzt werden kann. Die Speicherverwaltung MMU des Rasterprozessors 14 stellt mit Hilfe einer Tabelle fest, unter welcher physikalischen Adresse 0 bis X1 in der Ressourcen-Speichereinheit 6 der Ressourcen-Einheit RE, EI die "page" abgelegt ist. Die Speicherverwaltung MMU des Rastermoduls RM kommuniziert dann über den Controlbus 21 mit der Speicherverwaltung MMU Ressourcen-Verwaltungseinheit 9. Durch diese Kommunikation wird die benötigte "page" angefordert. Die Ressourcen-Verwaltungseinheit 9 schickt dann eine Kopie der gewünschten "page" über den Ressourcenbus 22 zum anfordernden Rastermodul RM. Dort werden die Daten der "page" in den Ressourcen-Pufferspeicher 10, E2 unter einer lokal vorhandenen, physikalischen Adresse 0 bis X2 gespeichert. Der Tabelleneintrag in der Speicherverwaltung MMU des Rastermoduls RM wird entsprechend aktualisiert und der Rasterprozessor 14 wird zur Fortsetzung des Programmablaufs aufgefordert.

Für den Fall, daß im Paket-Pufferspeicher 10 des Rastermoduls RM zu wenig Platz zur Eintragung der von der Ressourcen-Speichereinheit 6 transferierten "page" vorhanden ist, wird von der MMU diejenige im Paket-Pufferspeicher 10 enthaltene "page" ausgewählt, die am längsten nicht mehr benötigt worden war. Die ausgewählte "page" wird für ungültig erklärt und durch die Daten der neuen "page" überschrieben. Die ausgewählte "page" kann deshalb einfach gelöscht werden, weil es sich lediglich um eine Kopie aus der Ressourcen-Speichereinheit 6 handelt. Es kann also auf eine zeitaufwendige Auslagerung dieser "page" verzichtet werden, wodurch der Rasterprozeß zusätzlich beschleunigt wird.

Es versteht sich, daß bei entsprechendem Bedarf die Ressourcen-Speichereinheit 6 auch ganz oder teilweise in einem Paket-Pufferspeicher 10 eines Rastermoduls RM ausgelagert werden kann. Es ist beispielsweise zur Steigerung der Rasterleistung eines Controllers möglich, ein Rastermodul RM mit vergrößertem Ressourcen-Pufferspeicher 11 in den Controller einzufügen. Dadurch kann ohne zusätzlichen Eingriff in die Ressourcen-Einheit RE die Kapazität des Controllers zur Aufnahme von Bitmaps erhöht werden.

Durch die Anwendung des "paging" beim Datenaustausch zwischen den Systemeinheiten RE, PE, RM, wird zusätzlich ein "Cache-Effekt" erzielt. Bei der Anforderung benötigter Daten werden stets Datenblöcke, d.h. "pages" definierter Größe zwischen den Systemeinheiten RE, PE, RM ausgetauscht. In einer "page" sind jedoch mehr Daten enthalten, als zur Ausführung des nächsten Befehls beim Rastern benötigt werden. Beispielsweise soll beim aktuellen Befehl ein "A" eines bestimmten Fonts 33 geschrieben. Das "A" ist in einer "page" enthalten, die auch noch die Rasterinformation für die Buchstaben B, C, D und E enthält. Soll mit dem nächsten Befehl ein "C" des gleichen Fonts 33 auf der zu rasternden Seite eingefügt werden, dann ist dieses "C" bereits lokal im Ressourcen-Pufferspeicher 11 verfügbar. Soll ein anderer, in der ersten "page" nicht enthaltener Buchstabe des Fonts 33 gerastert werden, wird die entsprechende "page" in den lokalen Ressourcen-Pufferspeicher 11 geholt. Auf diese Weise wird der ganze Font 33 auf den lokalen Ressourcen-Pufferspeicher 11 übertragen. Zu druckende Texte dieses einen Fonts 33 können dann vom Rastermodul RM gerastert werden, ohne daß weitere Beanspruchungen des Ressourcenbusses 22 erfolgen. Die dem Font 33 zugeordneten "pages" werden auf Grund der Bedingung, daß stets diejenige "page" überschrieben wird, die am längsten nicht mehr benötigt wurde, erst gelöscht, wenn der Font 33 nicht mehr benötigt wird.

Es ist auch möglich, bei der Anforderung einer aktuell benötigten "page" gleich weitere nachfolgende "pages" mit anzufordern. Dadurch kann beispielsweise ein kompletter Font 33 mit einer einzigen Anforderung einer Interrupt-Service-Routine in den Ressourcen-Pufferspeicher 11 eines Rastermoduls RM geholt werden.

Der Transfer von Arbeitspaketen zwischen der Paketeinheit PE und einem Rastermodul RM, erfolgt in.analoger Weise. Der Rasterprozessor 14 eines Rastermoduls RM, erhält die virtuelle Anfangsadresse Y' bis K' des Arbeitspakets in der Displayliste 30. Mit Hilfe der Interrupt-Service-Routine wird eine "page", die die Anfangsadresse des Arbeitspakets 30 enthält, in den Paket-Pufferspeicher 10 übertragen. In dieser "page" ist eine Mehrzahl von Metakommandos 31, 32 enthalten. Erst nach Abarbeitung all dieser Metakommandos 31, 32, wird ein neuer Interrupt ausgelöst und die Interrupt-Service-Routine zur Erlangung der Folge-"page" ausgelöst. Die Belastung des Displaylistbusses 20 ist entsprechend gering.

Sollen Bitmaps beispielsweise ein Font 33, 34 oder eine auf einer Seite darzustellende Grafik in der Ressourcen-Speichereinheit 6 des Controllers gespeichert werden, dann muß ein sogenannter Speicher-Pool erzeugt werden. Ein solcher Speicher-Pool hat folgende Eigenschaften:

Ein erzeugter Pool bekommt eine innerhalb des Controllers eindeutige Kennung. Die Größe eines Pools ist bedingt durch das "paging", ein Vielfaches einer einzelnen "page" (z.B. 4KByte).

Innerhalb eines erzeugten Pools können einzelne Speicherabschnitte dem Pool zugewiesen oder freigegeben werden. Die Größe der zugewiesenen Speicherbereiche kann zwischen einem Byte und dem größten zusammenhängenden physikalischen Speicherbereich innerhalb des Pools liegen. In welcher Funktionseinheit RE, PE, RM der Pool erzeugt wird, wird durch einen Parameter festgelegt. Die MMU der jeweiligen Funktionseinheit RE, PE, RM stellt die notwendigen Funktionen, die zur Zuweisung oder zur Freigabe von Speichern benötigt werden, zur Verfügung. Wird ein Pool freigegeben, werden auch alle innerhalb des Pools liegenden, diesem Pool zugewiesenen Speicherbereiche freigegeben.

Für einen Pool ist ein Eigentumsrecht definiert. Eigentümer des Pools ist zunächst der, der den Pool erzeugt hat. Dieses Eigentumsrecht kann vergeben und wiedererlangt werden. Der Eigentümer des Pools darf alle definierten Operationen auf diesem Pool durchführen. Ein Zugriff von Nichteigentümern auf den Pool führt zu einem Fehler. Wird das Eigentumsrecht auf den Pool abgegeben, dann existiert kein Eigentümer mehr für den Pool. In diesem Fall darf jede Funktionseinheit RE, PE, RM lesend auf den Pool zugreifen.

Gelangt beispielsweise eine Grafik über den HOST zum Parser 2, dann aktiviert der Parser 2 die Ressourcen-Verwaltungseinheit 9. Die Ressourcen-Verwaltungseinheit 9 erzeugt einen Pool in der Ressourcen-Speichereinheit 6 und weist diesem Pool eine Kennung zu. Diese Kennung gibt sie an den Parser 2 weiter, der sie zur Erstellung des Metakommandos 31 verwendet. Mit Hilfe dieses Metakommandos kann später ein Rastermodul RM auf den Pool zugreifen. Die Ressourcen-Verwaltungseinheit 9 hat nun die Kontrolle über den Pool und kann diesen je nach Bedarf durch Zuweisen oder Freigeben von Speicherplatz vergrößern bzw. verkleinern. In diesem Pool wird die vom HOST erhaltene Bitmap gespeichert. Ist die gesamte Bitmap im Pool enthalten, gibt die Ressourcen-Verwaltungseinheit 9 die Kontrolle über den Pool ab. Jetzt kann jede beliebige Einheit RE, PE, RM auf den Pool lesend zugreifen. Sollen nachträglich Änderungen am Pool vorgenommen werden, kann durch eine spezielle Anforderung die Poolkontrolle wiedererlangt werden und die Änderung vorgenommen werden. Eine solche Änderung kann beispielsweise das Freigeben oder Löschen des Pools sein. Beim Löschen eines Pools ist gleichzeitig dafür gesorgt, daß alle Kopien des Pools, auch von Teilen des Pools, ebenfalls gelöscht oder für ungültig erklärt werden. Ein nochmaliger Zugriff auf einen gelöschten Pool führt dann zu einer Fehlermeldung.

Die Ausgabe der gerasteten Bildinformation aus dem Rastermodul RM über den Pixelbus 23 zum Zeichengenerator 8, erfolgt auf folgende Weise. Der Printprozessor 7 eines Rastermoduls RM, das die gerasterte Bildinformation für die nächste zu druckende Seite enthält, wird von der Paketverwaltungseinheit 4 darüber informiert, daß er bei der nächsten Anforderung aus dem Pixelbus 23 eine bestimmte Seite auf den Pixelbus 23 auszugeben hat. Der nachfolgende Interrupt auf den Pixelbus 23, wird entsprechend von diesem Printprozessor 7 empfangen.

Der Printprozessor 7 überträgt die erforderlichen Daten zum Auslesen der gesamten Seite an die Steuerung des Pixelbus 23, woraufhin diese die gesamte Seite aus dem Rasterpufferspeicher RP des Rastermoduls RM ausliest. Durch einen weiteren Interrupt signalisiert der Pixelbus 23 dem Printprozessor 7 das erfolgreiche Auslesen der Seite, woraufhin der Druckprozeß abgeschlossen ist.

**Patentansprüche**

1. Controller zur Aufbereitung von kodierten Bildinformationen in einem elektrografischen Druck- oder Kopiergerät, so daß ein Zeichengenerator (8) ein Ladungsbild in Abhängigkeit von der Bildinformation auf einem Zwischentrager (24) erzeugen kann, mit

   - einer Schnittstelle (1) zum Empfang der kodierten Bildinformationen,
   - einer Umsetzungseinheit (2), die in den kodierten Bildinformationen enthaltene Daten in voneinander unabhängig verarbeitbare Arbeitspakete (30) bündelt,
   - einer Paket-Speichereinheit (3) zur paketweisen Speicherung der Daten,
   - einer Paket-Verwaltungseinheit (4) für die Arbeitspakete (30), die mit einer Mehrzahl von Rastermodulen (RM) zum Rastern von Bildinformationen gekoppelt ist und den Rastermodulen (RM) je ein Arbeitspaket (30) zuteilt,
   - einer Ressourcen-Speichereinheit (6) zur Speicherung von Bitmaps, die mittels der in den Arbeitspaketen (30) enthaltenen Daten auswählbar sind, und
   - mindestens einer Ausgabeeinheit (7) zur Ausgabe der in pixelform vorliegenden Bildinformation an den Zeichengenerator (8),

   **gekennzeichnet durch**

- einen jedem Rastermodul (RM) zugeordneten Ressourcen-Pufferspeicher (11),
- einen jedem Rastermodul (RM) zugeordneten Rasterprozessor (14), der Zugriff auf einen virtuellen Adressraum (AYK) hat, der zumindest den physikalisch tatsächlich vorhandenen Speicherraum aller Ressourcen-Pufferspeicher (11) und der Ressourcen-Speichereinheit (6) umfaßt.

2. Controller nach Anspruch 1 **gekennzeichnet durch** eine blockweise Aufteilung innerhalb der Ressourcen-Speichereinheit (6) und der Ressourcen-Pufferspeicher (11), so daß ein Datentransfer zwischen den Speichern (6,11) stets blockweise erfolgt.

3. Controller nach einem der Ansprüche 1 oder 2 **gekennzeichnet durch** einen um einen Vergrößerungsfaktor v vergrößerten virtuellen Adressraum (AYK).

4. Controller nach einem der vorhergehenden Ansprüche, **gekennzeichnet durch** eine Umsetzungseinheit (2), die die kodierten Bildinformationen in von den Rastermodulen (RM) verarbeitbare Bildinformationen umsetzt und in Form einer Bitmap einer Ressourcen-Verwaltungseinheit (9) übergibt, die die Bitmap in der Ressourcen-Speichereinheit (6) ablegt.

5. Controller nach einem der vorhergehenden Ansprüche, **gekennzeichnet durch** Arbeitspakete (30), die jeweils die Daten einer vollständigen zu druckenden Seite beinhalten, wobei sich diese Daten zusammensetzen aus

- Steuerinformationen zur Positionierung einzelner Bitmaps auf der Seite und
- Daten zum Auffinden einer Bitmap in der Ressourcen-Speichern (6,11).

6. Verfahren zur Aufbereitung von kodierten Bildinformationen in einem elektrografischen Druck- oder Kopiergerät, so daß ein Zeichengenerator (8) ein Ladungsbild in Abhängigkeit von der Bildinformation auf einem Zwischenträger (24) erzeugen kann, mit folgenden Schritten:

- Empfang von kodierten Bildinformationen,
- Bündeln der in den kodierten Bildinformationen enthaltenen Daten in voneinander unabhängig verarbeitbare Arbeitspakete (30) der Größe einer zu druckenden Seite ,
- paketweise Speicherung von Daten, die wenigstens ein Arbeitspaket (30) charakterisieren,
- Zuteilen der Arbeitspakete (30) an eine Mehrzahl von Rastermodulen (RM), derart, daß zu je einem Rastermodul (RM) ein Arbeitspaket (30) übertragen wird,
- Auswahl von Bitmaps aus einer Ressourcen-Speichereinheit (6), mittels der in den Arbeitspaketen (30) enthaltenen Daten,
- Rastern des Arbeitspaketes (30), derart, daß die ausgewählten Bitmaps anhand von im Arbeitspaket (30) enthaltenen Positionierungs- und Steuerinformationen verarbeitet werden,
- Ausgabe der in pixelform vorliegenden Bildinformation an den Zeichengenerator (8),

**gekennzeichnet durch**

- einen jedem Rastermodul (RM) zugeordneten Ressourcen-Pufferspeicher (11),
- einen jedem Rastermodul (RM) zugeordneten Rasterprozessor (14), der Zugriff auf einen virtuellen Adressraum (AYK) hat, der zumindest den physikalisch tatsächlich vorhandenen Speicherraum aller Ressourcen-Pufferspeicher (11) und der Ressourcen-Speichereinheit (6) umfaßt.

7. Verfahren nach der Anspruch 6, mit jeweils einen Paket-Pufferspeicher (10), einen Ressourcen-Pufferspeicher (11) und einen Rasterprozessor (14) enthaltenden Rastermodulen (RM), wobei der Rasterprozessor (14) auf einen virtuellen Adressraum (AYK) zugreifen kann, der größer ist als der bei Betrachtung aller Ressourcen-Pufferspeicher (11) und der Ressourcen-Speichereinheit (6) zur Verfügung stehende physikalisch tatsächlich vorhandene Speicherraum, mit folgenden Schritten:

- Lesen einer virtuellen Adresse (Y bis K) aus dem Paket-Pufferspeicher (10),
- Überprüfen anhand einer Tabelle, ob der virtuellen Adresse (Y bis K) eine physikalische Adresse (0 bis X) des lokalen Ressourcen-Pufferspeichers (11) zugeordnet ist,
- wenn nicht, Anfordern und Übertragen eines die Daten der physikalischen Adresse (0 bis X) enthaltenden Datenblocks aus dem entsprechenden Ressourcen-Speicher (6),
- Übernehmen des Datenblocks in den lokalen Ressourcen-Pufferspeicher (11) und entsprechendes Ändern des Tabelleneintrags,

- Lesen und Verarbeiten der Daten aus dem lokalen Ressourcen-Pufferspeicher (11) durch den Rasterprozessor (14).

8. Verfahren nach Anspruch 7 bei dem zur Übernahme des Datenblocks in den lokalen Ressourcen-Pufferspeicher (11) nicht genügend Speicherplatz vorhanden ist, mit folgenden Schritten:

- Auswahl eines nicht mehr benötigten Datenblocks aus dem lokalen Ressourcen-Pufferspeicher (11),
- Löschen des ausgewählten Datenblocks, und
- entsprechendes Ändern des Tabelleneintrags.

## Claims

1. Controller for conditioning coded image information in an electrographic printer or copier, thereby enabling a character generator (8) to generate a charge image dependent on the image information on an intermediate carrier (24), having

- an interface (1) for receiving the coded image information,
- a conversion unit (2), which groups data contained in the coded image information into work packets (30) that can be processed independently of one another,
- a packet memory unit (3) for storing the data in packets,
- a packet management unit (4) for the work packets (30), which is coupled to a plurality of raster modules (RM) for rasterizing image information and allocates a work packet (30) to each of the raster modules (RM),
- a resource memory unit (6) for storing bit maps which can be selected by means of the data contained in the work packets (30), and
- at least one output unit (7) for outputting the image information present in pixel form to the character generator (8),

characterized by

- a resource buffer memory (11) assigned to each raster module (RM),
- a raster processor (14), which is assigned to each raster module (RM) and has access to a virtual address space (AYK) comprising at least the actual physical memory space of all the resource buffer memories (11) and of the resource memory unit (6).

2. Controller according to Claim 1, characterized by block-by-block division within the resource memory unit (6) and the resource buffer memories (11), with the result that a data transfer between the memories (6, 11) always takes place block by block.

3. Controller according to either of Claims 1 and 2, characterized by a virtual address space (AYK) which is enlarged by an enlargement factor v.

4. Controller according to one of the preceding claims, characterized by a conversion unit (2) which converts the coded image information into image information that can be processed by the raster modules (RM), and transfers the said information in the form of a bit map to a resource management unit (9), which stores the bit map in the resource memory unit (6).

5. Controller according to one of the preceding claims, characterized by work packets (30) each comprising the data of a complete page to be printed, the data being composed of

- control information for positioning individual bit maps on the page, and
- data for retrieving a bit map in the resource memories (6, 11).

6. Method for conditioning coded image information in an electrographic printer or copier, thereby enabling a character generator (8) to generate a charge image dependent on the image information on an intermediate carrier (24), having the following steps:

- reception of coded image information,
- grouping of the data contained in the coded image information into work packets (30) that can be processed independently of one another and have the size of a page to be printed,
- packet-by-packet storage of data which characterize at least one work packet (30),
- allocation of the work packets (30) to a plurality of raster modules (RM), in such a way that a work packet (30) is transmitted to each raster module (RM),
- selection of bit maps from a resource memory unit (6), by means of the data contained in the work packets (30),
- rasterizing of the work packet (30) in such a way that the selected bit maps are processed using positioning and control information contained in the work packet (30),
- outputting of the image information present in pixel form to the character generator (8),

characterized by

- a resource buffer memory (11) assigned to each raster module (RM),
- a raster processor (14), which is assigned to each raster module (RM) and has access to a virtual address space (AYK) comprising at least the actual physical memory space of all the resource buffer memories (11) and of the resource memory unit (6).

7. Method according to Claim 6, having in each case a packet buffer memory (10), a resource buffer memory (11) and raster modules (RM) containing a raster processor (14), the raster processor (14) being able to access a virtual address space (AYK) which is larger than the actual physical memory space available when taking account of all the resource buffer memories (11) and the resource memory units (6), having the following steps:

- reading of a virtual address (Y to K) from the packet buffer memory (10),
- checking using a table to see whether the virtual address (Y to K) is assigned a physical address (0 to X) of the local resource buffer memory (11),
- if not, requesting and transmission of a data block, containing the data of the physical address (0 to X), from the corresponding resource memory (6),
- acceptance of the data block in the local resource buffer memory (11) and corresponding changing of the table entry,
- reading and processing of the data from the local resource buffer memory (11) by the raster processor (14).

8. Method according to Claim 7, in which there is not enough memory space for accepting the data block in the local resource buffer memory (11), having the following steps:

- selection of a data block that is no longer required from the local resource buffer memory (11),
- erasure of the selected data block, and
- corresponding changing of the table entry.

## Revendications

1. Régisseur (controller) pour la préparation d'informations d'image codées dans un appareil d'impression ou de copie électrographique, de telle sorte qu'un générateur de signes (8) peut produire une image de charge en fonction de l'information d'image sur un support intermédiaire (24), avec

- une interface (1) pour recevoir les informations d'image codées,
- une unité de conversion (2) qui assemble les données contenues dans les informations d'image codées en paquets de travail (30) pouvant être traités indépendamment les uns des autres,
- une unité de mémorisation de paquets (3) pour mémoriser les données par paquets,
- une unité de gestion de paquets (4) pour les paquets de travail (30), qui est couplée à une pluralité de modules de grille (RM) pour disposer les informations d'image en grilles et qui distribue un paquet de travail (30) à chaque fois aux modules de grille (RM),
- une unité de mémorisation de ressources (6) pour sauvegarder des bitmaps pouvant être sélectionnés au moyen des données contenues dans les paquets de travail (30) et
- au moins une unité de sortie (7) pour la sortie des informations d'image sous la forme de pixels vers le générateur de signes (8),

EP 0 782 739 B1

caractérisé par

- une mémoire tampon de ressources (11) associée à chaque module de grille (RM),
- un processeur de grille (14) associé à chaque module de grille (RM), qui a accès à un espace d'adresse virtuel (AYK), qui comprend au moins l'espace de mémoire effectivement présent physiquement de toutes les mémoires tampon de ressources (11) et de l'unité de mémorisation de ressources (6).

2. Régisseur selon la revendication 1, caractérisé par une répartition par blocs à l'intérieur de l'unité de mémorisation de ressources (6) et de la mémoire tampon de ressources (11), de telle sorte qu'un transfert de données entre les mémoires (6, 11) se produit toujours par blocs.

3. Régisseur selon l'une des revendications 1 ou 2, caractérisé par un espace d'adresse virtuel (AYK) agrandi d'un facteur d'agrandissement v.

4. Régisseur selon l'une des revendications précédentes, caractérisé par une unité de conversion (2) qui convertit les informations d'image codées en informations d'image pouvant être traitées par les modules de grille (RM) et les transmet, sous la forme d'un bitmap, à une unité de gestion de ressources (9) qui dépose le bitmap dans l'unité de mémorisation de ressources (6).

5. Régisseur selon l'une des revendications précédentes, caractérisé par des paquets de travail (30) comportant chacun les données d'une page complète à imprimer, ces données étant constituées par

- des informations de commande pour le positionnement de bitmaps individuels sur la page, et
- des données permettant de trouver un bitmap dans les mémoires de ressources (6, 11).

6. Procédé pour la préparation d'informations d'image codées dans un appareil d'impression ou de copie électrographique, de telle sorte qu'un générateur de signes (8) peut produire une image de charge en fonction de l'information d'image sur un support intermédiaire (24), comportant les étapes suivantes :

- réception d'informations d'image codées,
- assemblage des données contenues dans les informations d'image codées en paquets de travail (30) pouvant être traités indépendamment les uns des autres, de la taille d'une page à imprimer,
- mémorisation par paquets de données caractérisant au moins un paquet de travail (30),
- distribution des paquets de travail (30) à une pluralité de modules de grille (RM), de telle sorte qu'un paquet de travail (30) est transmis à chaque fois à un module de grille (RM),
- sélection de bitmaps d'une unité de mémorisation de ressources (6) au moyen des données contenues dans les paquets de travail (30),
- disposition en grille du paquet de travail (30) de telle sorte que les bitmaps sélectionnés sont traités à l'aide des informations de positionnement et de commande contenues dans le paquet de travail (30),
- sortie de l'information d'image, sous forme de pixels, vers le générateur de signes (8),

caractérisé par

- une mémoire tampon de ressources (11) associée à chaque module de grille (RM),
- un processeur de grille (14) associé à chaque module de grille (RM), qui a accès à un espace d'adresse virtuel (AYK), qui comprend au moins l'espace de mémoire effectivement présent physiquement de toutes les mémoires tampon de ressources (11) et de l'unité de mémorisation de ressources (6).

7. Procédé selon la revendication 6, comportant des modules de grille (RM) contenant chacun une mémoire tampon de paquets (10), une mémoire tampon de ressources (11) et un processeur de grille (14), ledit processeur de grille (14) pouvant accéder à un espace d'adresse virtuel (AYK) qui est plus grand que l'espace de mémoire effectivement disponible physiquement en prenant en compte toutes les mémoires tampon de ressources (11) et l'unité de mémorisation de ressources (6), et comportant les étapes suivantes:

- lecture d'une adresse virtuelle (Y à K) de la mémoire tampon de paquets (10),
- contrôle au moyen d'une table, pour vérifier qu'une adresse physique (0 à X) de la mémoire tampon de ressources (11) locale est associée à l'adresse virtuelle (Y à K),
- si ce n'est pas le cas, demande et transmission d'un bloc de données contenant les données de l'adresse

12

physique (O à X), à partir de la mémoire de ressources (6) correspondante,
- transfert du bloc de données dans la mémoire tampon de ressources (11) locale et modification correspondante de l'entrée de la table,
- lecture et traitement des données provenant de la mémoire tampon de ressources locale (11) par le processeur de grille (14).

8. Procédé selon la revendication 7, dans lequel il n'y a pas assez de place de mémoire dans la mémoire tampon de ressources (11) locale pour le transfert du bloc de données, comportant les étapes suivantes :

- sélection dans la mémoire tampon de ressources (11) locale d'un bloc de données qui n'est plus nécessaire,
- effacement du bloc de données sélectionné, et
- modification correspondante de l'entrée de la table.

## Fig 1

**FIG 2**

EP 0 782 739 B1

FIG 3

30

31

32

33

A
B

34

A
B

FIG 4

31

ID

36

16

# FIG 5

EP 0 782 739 B1

**FIG 6**

18

# FIG 7

START

A →
D →
E →

WARTE

A, D ODER E ?

NEUE SEITE ?    RAST END ?    PRINT END ?

PRINT AKT ?    N    NEXT PAGE ?

J    N    N    J

START PRINT

C

PAKET IN PE ?

N    J

EIN RM FREI ?

N    J

PAKET AN RM →    B

# FIG 8

**FIG 9**